# EUROPEAN PATENT SPECIFICATION

(11) **EP 4 530 028 B1**
(45) Date of publication and mention of the grant of the patent: **11.11.2026**
(21) Application number: 24202894.2
(22) Date of filing: 26.09.2024
(51) Int. Cl.: B25J 9/16, B65G 57/30, B25J 15/00

(54) **STACKING SYSTEM AND STACKING METHOD FOR STACKING WORKPIECES USING A ROBOT ARM**
STAPELSYSTEM UND VERFAHREN ZUM STAPELN VON WERKSTÜCKEN MIT EINEM ROBOTERARM
SYSTÈME D'EMPILEMENT ET PROCÉDÉ D'EMPILEMENT POUR EMPILER DES PIÈCES À L'AIDE D'UN BRAS DE ROBOT

(30) Priority: 27.09.2023 JP 2023165994
(43) Date of publication of application: 02.04.2025
(73) Proprietor: DENSO WAVE INCORPORATED, Chita-gun, Aichi-pref. 470-2297 (JP)
(72) Inventor: IKEDA, Ryuji, Chita-gun, Aichi-pref. 470-2297 (JP)
(74) Representative: Winter, Brandl - Partnerschaft mbB

(56) References cited:
- CN-A- 111 285 094
- CN-U- 218 808 931
- JP-A- 2017 081 741
- JP-A- 2019 127 347
- KR-A- 20230 063 828

## Description

### Background

### [Technical Field]

The present invention relates to a stacking system and a stacking method for stacking workpieces using an industrial robot, and in particular, to a stacking system and a stacking method for gripping workpieces which are positioned separately from ether and placing the workpieces at a target position in a multiple-layer stacked state.

### [Background Art]

As can be seen in product production lines, the production process often involves stacking a plurality of flat-shaped workpieces, which are placed at a distance from each other, at a predetermined location. The stacking technique is used for stacking of multiple workpieces in multiple layers in its vertical direction. JP 2017 - 081741 A discloses a stacking device for performing such stacking work. The stacking system disclosed in JP 2017 - 081741 A is a complex structure fixed at the position where stacking is performed. Therefore, a system that performs the stacking work using a robot arm has been considered in the past for the purpose of raising a freedom of movement and simplifying the system structure.

Moreover, KR 2023 0063828 A discloses a gripper apparatus capable of picking up an object, comprising: a first gripper unit including a first body having a preset volume and a pair of first grippers movably connected to a lower portion of the first body to be able to move in the left-right direction; and a second gripper unit connected to a lower portion of the first gripper unit and positioned in a space formed between the first grippers.

### [Technical Problem]

Normally, when stacking work is performed using a robot arm, the operation flow is as follows.

First, the tip of the robotic arm is moved to the vicinity of a location where a workpiece is placed for acquisition, and the hand attached to the tip of the robotic arm grips the workpiece. Then, the tip of the robot arm is moved to the vicinity of a placement location, and the workpiece is temporarily placed at the placement location. By performing these gripping and temporary placement operations on all workpieces, multiple workpieces are stacked at the placement location. In the normal stacking operation, the workpieces are temporarily placed one by one at the placement location and stacked there on one another. This may increase the travel distance of the robot arm, resulting in a longer cycle time for the stacking work.

### Summary

Hence, in view of the above circumstances, it is desired to provide a stacking system and a stacking method that can shorten the cycle time for stacking work. The invention is set out in the appended set of claims.

In order to realize the foregoing object, one mode of the present invention is provided as a system for gripping a plurality of workpieces placed at mutually separated acquisition locations and then stacking the plurality of gripped workpieces at a predetermined placement location, comprising: a robot system with a hand attached to a tip of the hand, the hand being for gripping the workpieces; and a controller adapted to control operations of the robot arm. In this configuration, the hand the hand is structured to grip, at one time, all of the plurality of workpieces in a stacked state, and the controller is adapted to perform a gripping process and a placement process. The gripping process moves the tip of the robot arm to the vicinity of each of the acquisition locations and grip (i.e., pick up) the plurality of workpieces one by one by the hand. This gripping process is repeated until all of the plurality of workpieces are gripped by the hand in the stacked state. The placement process moves the tip of the robot arm to the vicinity of the placement location and place all of the multiple workpieces at the placement location while still keeping the workpieces stacked in the stacked state.

Another mode of the present invention is provided as a method of gripping a plurality of workpieces placed at mutually separated acquisition locations and then stacking the plurality of gripped workpieces at a predetermined placement location, the method being applied a robot system with a hand attached to a tip of the hand, the hand being for gripping the workpieces, the hand being structured to grip, at one time, all of the plurality of workpieces in a stacked state. The method includes steps of: moving the tip of the robot arm to the vicinity of each of the acquisition locations and gripping the plurality of workpieces one by one using the hand, the moving and gripping step being repeated until all of the plurality of workpieces are gripped by the hand in the stacked state; and moving the tip of the robot arm to the vicinity of the placement location and placing all of the multiple workpieces at the placement location while still keeping the workpieces stacked in the stacked state.

Various other features and advantages from the foregoing modes can be clarified by the following embodiments explained with the accompanying drawings.

### Brief Description of Drawings

In the accompanying drawings:
Fig. 1 is an illustration showing the configuration of a robot which is adopted, as a stacking system according to an embodiment, at a site where multiple workpieces are placed at different acquisition locations;
Fig. 2 is an illustration showing the robot and multiple work pieces which are stacked at a placement location;
Fig. 3 is a side view showing how a first robot hand is configured according a first configuration mode of the embodiment;
Fig. 4 is a side view showing how a second robot hand is configured according a second configuration mode of the embodiment;
Fig. 5 is a side view showing how a third robot hand is configured according a third configuration mode of the embodiment;
Fig. 6 is a side view showing how a fourth robot hand is configured according a fourth configuration mode of the embodiment;
Fig. 7 is a partial side view showing how the placement edge of the robot hand collapses in the upward direction, in the fourth configuration mode of the embodiment;
Fig. 8 is a partial side view showing the robot hand is not gripping workpieces, in the fifth configuration mode of the embodiment;
Fig. 9 is a partial side view showing the robot hand during gripping work for workpieces, in the fifth configuration mode of the embodiment;
Fig. 10 is a flowchart showing a first process executed by a controller adopted in the first embodiment;
Fig. 11 is an illustration explaining how the stacking work is performed step by step under the first process executed by the controller adopted in the first embodiment;
Fig. 12 is a flowchart showing a second process executed by the controller adopted in the first embodiment;
Fig. 13 is an illustration explaining how the stacking work is performed step by step under the second process executed by the controller adopted in the first embodiment;
Fig. 14 is a flowchart showing a third process executed by the controller adopted in the first embodiment;
Fig. 15 is an illustration explaining how the stacking work is performed step by step under the third process executed by the controller adopted in the first embodiment;
Fig. 16 is an illustration explaining how the arm tip should be moved in a stacking work which is according to a known comparative example according to prior art;
Fig. 17 is an illustration explaining how the arm tip is moved in a stacking work which is according to the embodiment;
Fig. 18 is an illustration explaining operations for gripping the second and subsequent workpieces by the robot hand according to the second configuration mode;
Fig. 19 is an illustration explaining operations for gripping the second and subsequent workpieces by the robot hand according to the first configuration mode;
Fig. 20 is a perspective view showing a modification of a robot hand which is yet to grip a workpiece;
Fig. 21 is a perspective view showing that the robot hand is gripping workpieces; and
Fig. 22 is an illustration showing that both a plurality of stacked workpieces are slightly shifted from each other (Fig. 22(A)) and a plurality of stacked workpieces are aligned, when being viewed in the vertical direction (Fig. 22(B)).

### Description of the Preferred Embodiments

With reference to the drawings, a plurality of embodiments will be described below. Components substantially common to the respective embodiments are denoted by the same reference numerals.

The following is a description of a stacking system according to one embodiment, with reference to the drawings.

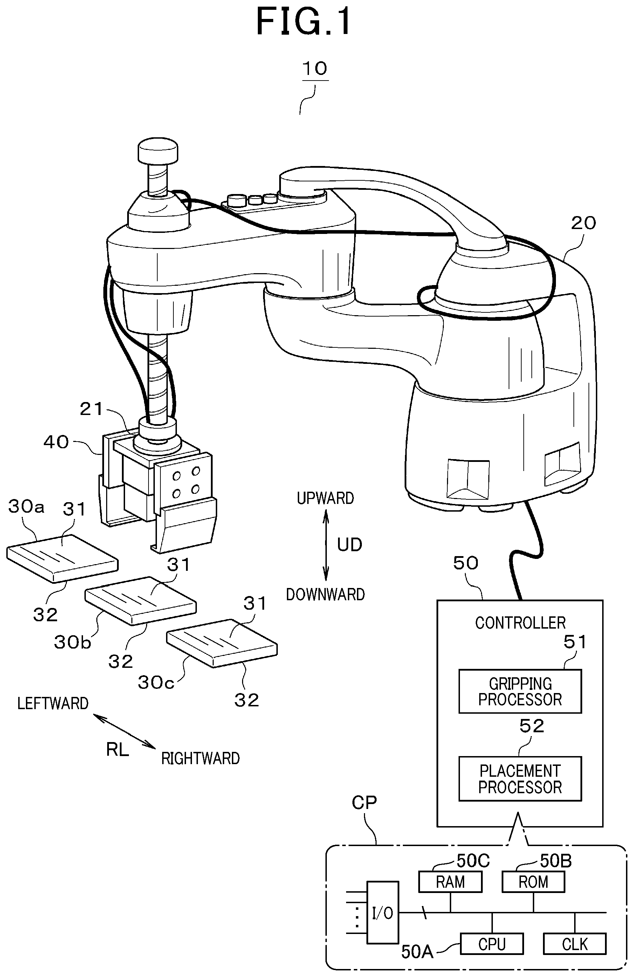

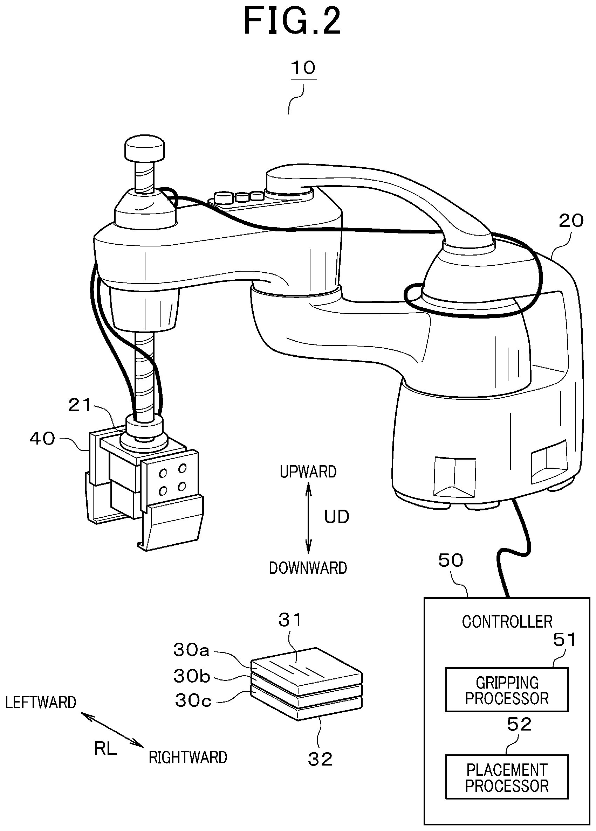

As shown in Figs. 1 and 2, a stacking system 10 is provided as a system for stacking a plurality of workpieces 30a, 30b, 30c one on another, using a robot arm 20, i.e., the arm of an industrial robot. Specifically, the stacking system 10 is a system that uses the robot arm 20 to grip (i.e., pick up), one by one, a plurality of workpieces 30a to 30c that are placed discretely, i.e., at acquisition locations far from each other, as shown in Fig. 1, and then place the workpieces 30a to 30c at a predetermined placement location as shown in Fig. 2, in a multi-layer staked state thereat. The acquisition location and placement location are set at arbitrary locations, such as locations on a table having a flat surface, a container, a floor, a shelf, or other objects. Stacking work (process, or operation) means stacking in multiple layers in a direction perpendicular to the plane at the placement location. In the following description, the workpieces 30a through 30c will be collectively referred to as workpieces (or a workpiece) 30 when there is no need to distinguish between them.

In the present embodiment, the case of stacking three workpieces 30a - 30c is shown as an example, but the number of workpieces 30 to be stacked need not be limited to three; it can be two, four, or more. However, the number of workpieces to be stacked is limited to the number that can be gripped by the robot arm 20. The robot arm 20 is configured as a horizontal articulated robot having, for example, a 4-axis arm. The workpieces 30 are, for example, a food product which is contained in a flat shape container, such as a small-size flat box. Specifically, the workpiece 30 has flat plate shape having two main surfaces 31 and 32 facing each other via a content therein.

In the present specification, as shown in Fig. 1, one of the two mutually orthogonal directions along the main surfaces 31 and 32 of each of the workpieces 30 is the horizontal direction RL, and the direction orthogonal to the main surfaces 31 and 32 is assigned to the vertical direction UD.

A hand 40 for gripping workpieces 30 is attached to the end of the robot arm 20. The hand 40 has a structure that can almost simultaneously or very quickly grip (or grasp) all of a plurality of workpieces 30 in a stacked configuration. Figs. 1 and 2 show an example of the hand 40 having such a structure, but the structure of the hand 40 need not be limited to this, and various structures can be employed, including various structures as described below.

The operations of the robot arm 20, including its hand 40, are controlled by the controller 50. The controller 50 serves control means with a computer CP configured with elements such as a CPU (central processing unit) 50A, a ROM (Read Only memory) 50B, a RAM (Random Access Memory) 50C, and other components not shown. In this controller 50, the CPU 50A controls the operations of the robot arm 20 by reading various computer programs into its work area and executing the computer programs for controlling the robot, which are stored in advance in the ROM 50B that serves as a non-transitory computer readable medium or in an external memory. The controller 50 is provided to have functional blocks such as a gripping processor 51, a placement processor 52, and other processors by such control functions. In other words, both the gripping processor 51 and the placement processor 52 are functionally realized by software. Of course, at least a part of each functional block may be realized by hardware.

The gripping processor 51 (i.e., CPU 50A) is configured to move the arm tip 21, which is the tip of the robot arm 20, to the vicinity of each of acquisition locations and execute the gripping process to grip each of the multiple workpieces 30 one by one with the hand 40.

The term "the vicinity of each of the acquisition locations" can be used to refer to a spatial position directly above or diagonally above each workpiece to be acquired, the spatial position being set to be the shortest distance from each workpiece such that the robot arm can secure for operations such as opening and closing the hand, etc. during a time period of travel of the robot arm tip from the vicinity position to each of the work pieces.

The placement processor 52 (i.e., CPU 50A) is configured to grip all of the multiple workpieces 30 by the hand 40 as the gripping processor 51 repeatedly executes the gripping process. After this, the placement processor 52 is configured to move the arm tip 21 to the vicinity of a placement location and execute a placement process to place all of the plurality of workpieces 30 at the placement location while maintaining a stacked state.

The term "the vicinity of a placement location" can be referred to a spatial position directly above or diagonally above the placement location at which the workpieces are placed, the spatial position being set to be the shortest distance from the placement location such that the stacked workpieces can be safely landed (placed, arranged) at the placement location by the robot arm.

### <Examples of Specific Configurations of Hand>

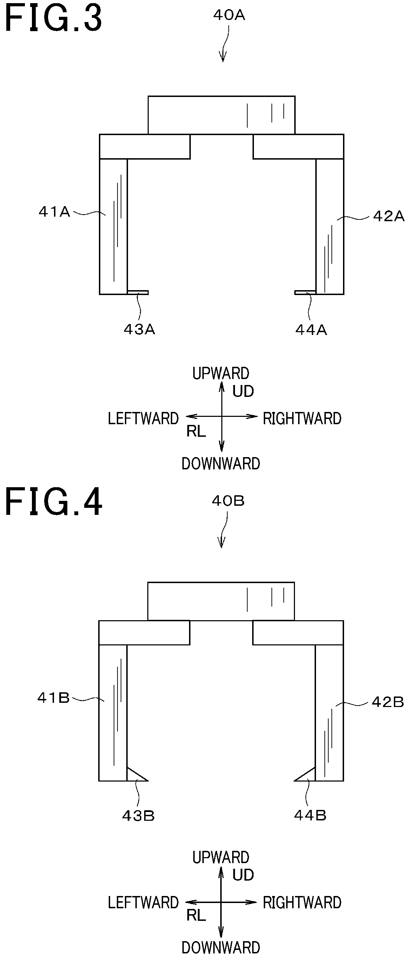

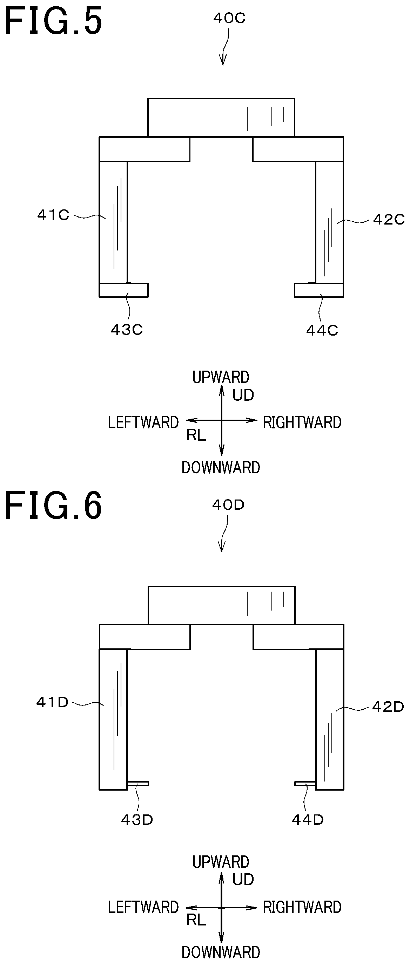

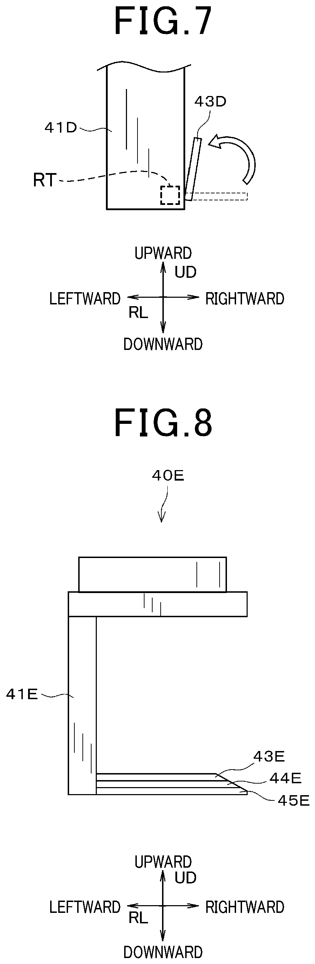

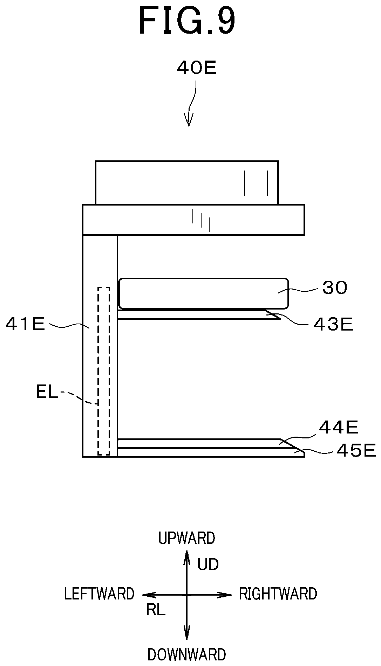

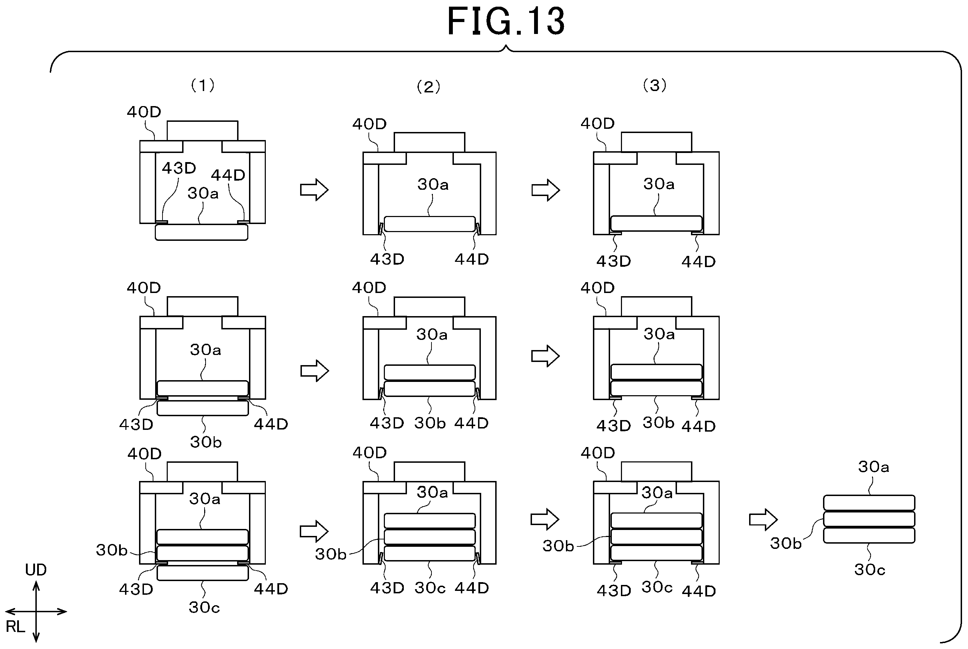

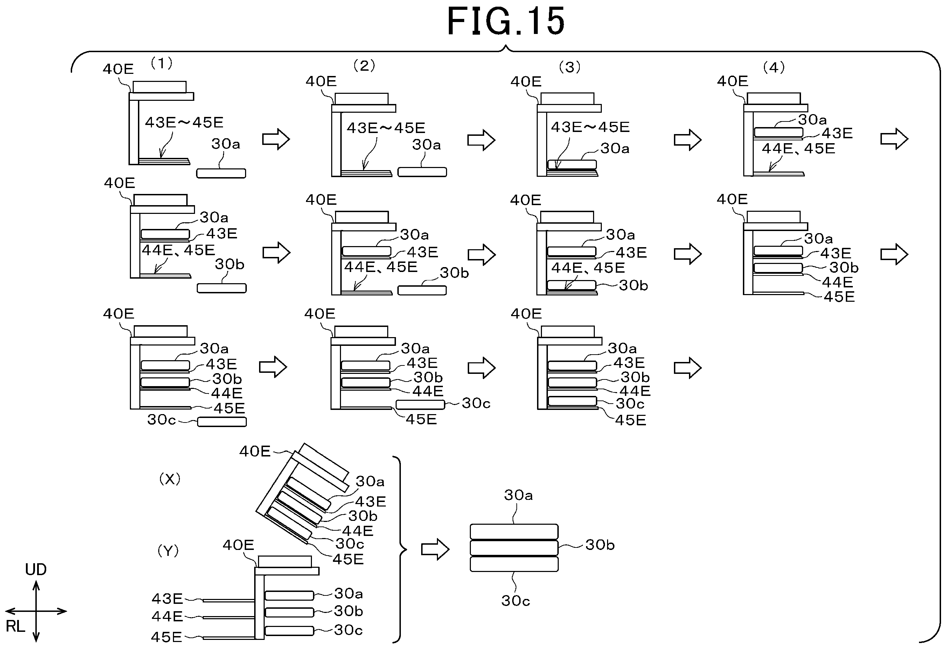

The hand 40 attached to the arm end (tip) 21 of the robot arm 20 can be configured in the following five specific configurations.
[1] First configuration mode:
   As shown in Fig. 3, a hand 40A provided in first configuration mode has two claws (claw portions) 41A and 42A that open and close in parallel in the horizontal direction RL. At the tips of the two claws 41A and 42A, loading portions (or loading edges) 43A and 44A are provided in a shape that extends along the horizontal direction RL. The loading portion 43A has a uniform thickness, which is the dimension of in the vertical direction UD, from the base, which is the left-side end in Fig. 3, to the tip, which is the right-side end in Fig. 3. The loading portion 44A has a uniform thickness from the base, which is the right-side end in Fig. 3, to the tip, which is the left-side end in Fig. 3. The thicknesses of the loading portions 43A and 44A are smaller than the thickness of the workpiece 30.
[2] Second configuration mode:
   As shown in Fig. 4, a hand 40B provided in the second configuration mode has two claws 41B and 42B that open and close in parallel in the horizontal direction RL. At the tips of the two claws 41B and 42B, loading portions 43B and 44B are provided in a shape that extends along the horizontal direction RL. The loading portion 43B has a shape in which the thickness gradually decreases from the base end, which is the left-side end in Fig. 4, to the tip end, which is the right-side end in Fig. 4, i.e., the thickness slopes downward from the base end to the tip end. The loading portion 44B has a shape in which the thickness gradually decreases from the base, which is the right-hand end in Fig. 4, to the tip, which is the left-side end in Fig. 4, in other words, the thickness slopes downward from the base to the tip. The thickness at each of the bases of the loading portions 43B and 44B is about the same as or larger than the thickness of the workpiece 30.
[3] Third configuration mode:
   As shown in Fig. 5, a hand 40C provided in the third configuration mode has two claws 41C and 42C that open and close in parallel in the horizontal direction RL. At the tips of the two claws 41C and 42C, loading portions 43C and 44C are provided in a shape extending along the horizontal direction RL. The loading portion 43C has a uniform thickness, which is the dimension in the vertical direction UD, from the base end, which is the left-side end in Fig. 5, to the tip end, which is the right-side end in Fig. 5. The loading portion 44C has a uniform thickness from the base, which is the right-side end in Fig. 5, to the tip, which is the left-side end in Fig. 5. The thickness of each of the loading portions 43C and 44C is about the same as or larger than the thickness of the workpiece 30.
[4] Fourth configuration mode:
   As shown in Fig. 7, a hand 40D provided in fourth configuration mode has two claws 41D, 42D that open and close in parallel in the horizontal direction RL. At the tips of the two claws 41D and 42D, loading portions (pieces) 43D and 44D are provided in a shape that extends along the horizontal direction RL. The loading portion 43D has a uniform thickness, which is the dimension in the vertical direction UD, from the base end, which is the left-side end in Fig. 6, to the tip end, which is the right-side end in Fig. 6. The loading portion 44D has a uniform thickness from the base, which is the right-side end in Fig. 6, to the tip, which is the left-side end in Fig. 6. The thicknesses of loading portions 43D and 44D are smaller than the thickness of the workpiece 30.
   As shown in Fig. 7, the loading portion (piece) 43D is configured so that its tip can rotate only upwardly around its base via a rotation mechanism RT incorporated in the claw 41D. Although not shown in the figure, in the same manner as that of the loading portion 43D, a loading portion 44D, is configured so that its tip can rotate upwardly around its base (refer to an arrow shown in Fig. 7). In other words, the loading portions 43D and 44D are configured so that their root ends linked to the claw bodies can rotate only in the upward direction only by pushing the loading portions 43D and 44D to each of the workpieces 30, thus making it possible that the workpiece 30 pushed by the loading portions 43D and 44D are taken (i.e., picked up or loaded) into the space formed by the claws 41D and 42D (refer to Fig. 13).
[5] Fifth configuration mode:
   As shown in Figs. 8 and 9, a hand 40E provided in the fifth configuration mode has one claw 41E. At the tip of claw 41E, three loading portions 43E, 44E, and 45E of a shape extending along the horizontal direction RL are provided so that they are stacked along the vertical direction UD. The number of loading portions need not be limited to three loading portions, but may be as many as the number of workpieces 30 to be stacked. The loading portions 43E - 45E are each individually movable along the vertical direction UD by an elevating mechanism EL. In addition, via the elevating mechanism EL, the loading portions 43E - 45E are each configured to be movable individually or collectively along the horizontal direction RL toward the outside of the hand 40E. In other words, the loading portions 43E - 45E are configured to be able to be pulled out of the hand 40E (not shown in Fig. 9, but refer to Fig. 15).

### <Specific Examples of gripping process and placement process>

The following specific contents of the gripping and placement processes executed by controller 50 (i.e., computer CP (i.e., CPU 50A)) can be adopted.

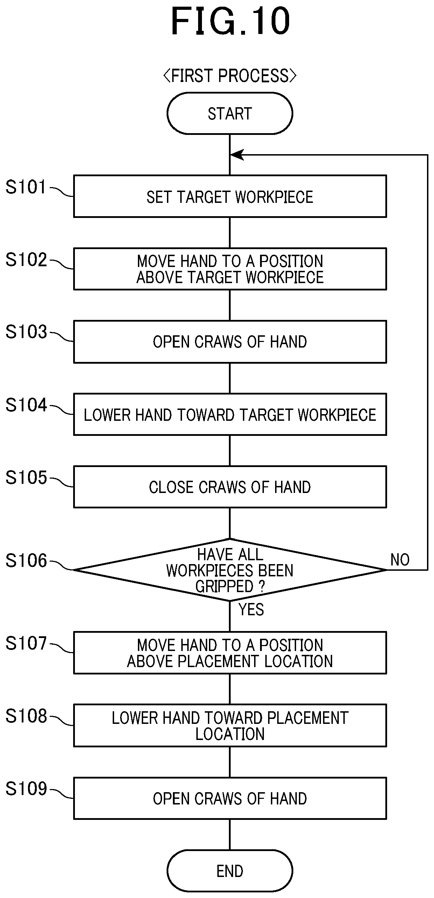

In the following, an example of specific processing contents corresponding to each of the first through fifth configuration modes of the hands 40 (40A to 40E) will be described with reference to Figs. 10 to 15.
[1] Contents of the first process adapted to the first through third configuration modes:
   As mentioned above, the hand 40A according to the first configuration mode, the hand 40B according to the second configuration mode, or the hand 40C according to the third configuration mode can be employed as the hand 40. In this case, the controller 50 is able to execute the first process as shown in Fig. 10. The first process is provided to realize a method of stacking workpieces 30 one on another by the hand 40, in which the hand 40 can be opened and closed in a controlled manner. In this mode, steps S102, S103, S104 and S105 shown in Fig. 10 are processes corresponding to the gripping process, and steps S107, S108 and S109 shown in Fig. 10 are processes corresponding to the placement process.

In step S101, one of the three workpieces 30 that has not yet been gripped by the hand 40 is set as a target workpiece to be gripped. In step S102, the process of moving the hand 40 to a position in the upper direction of the vertical direction UD of the target workpiece, i.e., above the target workpiece, is executed. In step S103, the process of opening the two claws 41A, 42A in the horizontal direction RL, i.e., opening the hand 40, is executed. The foregoing steps S102 and S103 can be executed in the reverse order or simultaneously.

In step S104, the process of moving the hand 40 downward, that is, lowering the hand 40 toward the target workpiece until the hand 40 reaches a height position (or the surface on which the target workpiece is placed) which allows the target workpiece to be loaded, is executed. In step S105, the two claws 41A, 42A are closed in the horizontal direction RL in a controlled manner. In other words, the process of loading the target workpiece on the loading portions 43A, 44A is executed by closing the hand 40. In step S106, it is determined whether all of the three workpieces 30 are gripped by the hand 40. When all of the three workpieces 30 have not been gripped by the hand 40, the determination "NO" is obtained in step S106, and the process returns to step S101. In contrast, when all of the three workpieces 30 have been gripped by the hand 40, the determination "YES" is obtained in step S106 and the process proceeds to step S107.

In step S107, the process of moving the hand 40 to a position above the placement location in the vertical direction UD is executed. In step S108, the hand 40 is moved downward until the placement location on the surface. In other words, the process is executed to move the hand 40 downward toward the placement location to reach the predetermined placement location. In step S109, the two claws 41A, 42A are opened in the horizontal direction RL. In other words, the process of placing the target workpiece at the placement location is executed by opening the hand 40, and then the present process is completed.

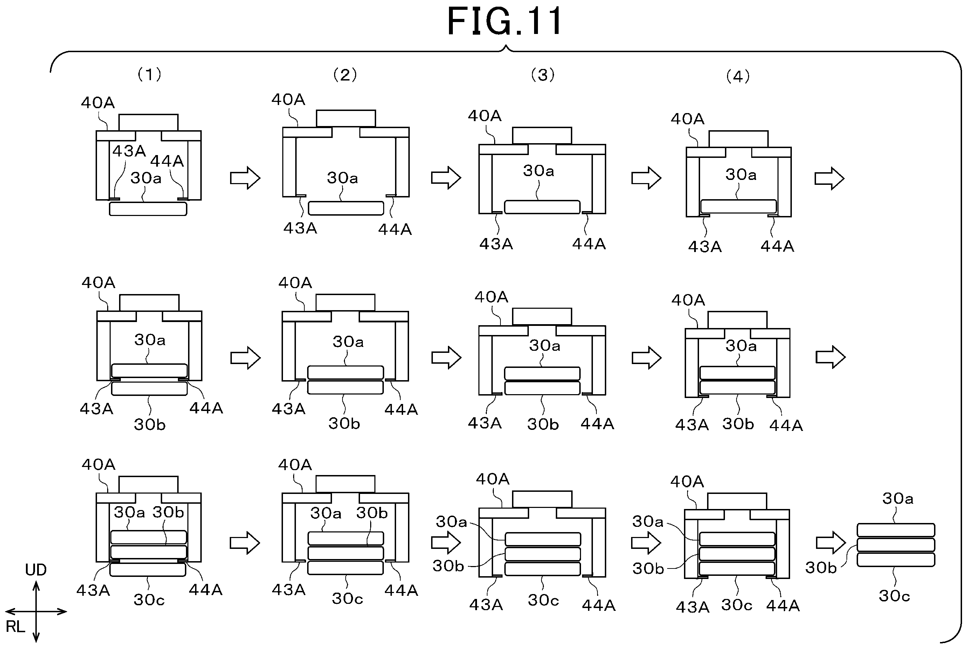

When the first process is performed by the controller 50, stacking of workpiece 30 is performed by a series of operations as shown in Fig. 11. In Fig. 11, there is provided an example in which the hand 40A adopted in first configuration mode is used as hand 40. Alternatively, when the hand 40B adopted in the second configuration mode or the hand 40C adopted in the third configuration mode is used as hand 40, stacking of the workpieces 30 is also performed by the same series of operations as those provided the hand 40A.

First, as shown in the first row of Fig. 11, the first workpiece 30a are gripped. The first operations to grip the first workpiece 30a is performed in the following order, starting from the left side of Fig. 11: In other words there are provided steps of "(1) move the hand 40A above the target workpiece, (2) open the hand 40A, (3) lower the hand 40A toward the target workpiece, and (4) place the target workpiece on the loading portions 43A and 44A by closing hand 40A."

Then, as shown in the second row of Fig. 11, the operations to grip the second workpiece 30b are performed. Then, as shown in the third row of Fig. 11, the operations to grip the third workpiece 30c are performed, and finally, the operations to place the three workpieces 30 (30a, 30b, 30c) at the preset placement location is performed.

The operations to place the three workpieces 30 at the preset placement location is "move the hand 40A to a position above the placement location", "lower the hand 40A toward and until the placement location", and "open the hand 40A", although the drawings showing these steps is omitted. This enables the three workpieces 30 to be placed at the preset placement location in a stacked state, as shown in the lower right corner in Fig. 11.

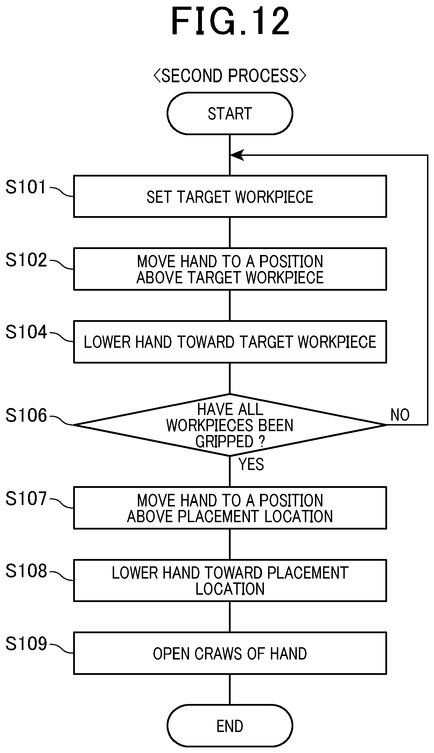

[2] Contents of the second process corresponding to the fourth configuration mode:
When the hand 40D according to the fourth configuration mode is used as the hand 40, the controller 50 is configured to execute the second process as shown in Fig. 12.

The second process is a process to realize a method of stacking workpieces 30 to be gripped by the hand 40D using the tips of the loading portions 43D and 44D which are structured to tilt only in the upward direction. The second process differs from the first process shown in Fig. 10 in that the steps S103 and S105 are omitted. In this second process, the steps S102 and S104 functionally correspond to the gripping process, and the steps S107, S108, and S109 functionally correspond to the placement process.

In the second process, the step S104 is executed after the step S102 has been executed. In this case, the step S104 is executed to lower the tip of hand 40D until its tip reaches the plane of the acquisition location. When this lowering is completed, the loading portions 43D and 44D formed at the tip of hand 40D tilts upward. This allows a target workpiece to enter the inside holding space formed by the hand 40D. Thereafter, the loading portions 43D and 44D at the tip of the hand 40D return to their original positions, so that the target workpiece is placed on the loading portions 43D and 44D in the holding space of the hand 40D. Hence, the step S104 corresponds to the process of placing the target workpiece on the loading portions 43D and 44D by moving the hand 40D downward.

When the hand 40D according to the fourth configuration mode is used as the hand 40 and the second process is executed by the controller 50, stacking of workpieces 30 is performed by a series of operations as illustrated in Fig. 13. First, as shown in the first row of Fig. 13, the first workpiece 30a are gripped. Practically, the operations to grip the first workpiece 30a is, in order from the left side of Fig. 13, "(1) move the hand 40D above a target workpiece," "(2) lower the hand 40D toward the target workpiece until reaching the target workpiece and place the target workpiece inside the space of the hand 40D," "(3) return the loading portions 43D and 44D to their original positions so that the target workpiece placed on the loading portions 43D and 44D".

Then, as illustrated in the second row of Fig. 13, the operations to grip a second workpiece 30b are performed. Then, as illustrated in the third row of Fig. 13, the operations to grip the third workpiece 30c are performed, and finally, the operations to place the three workpieces 30 at the placement location is performed. The operations to place the workpieces 30 at the placement location are "move the hand 40D to a position above the placement location", "lower the hand 40D toward the placement location until reaching the placement location", and "open the hand 40D", although the figure is omitted. This places the three workpieces 30 at the placement location in a stacked state.

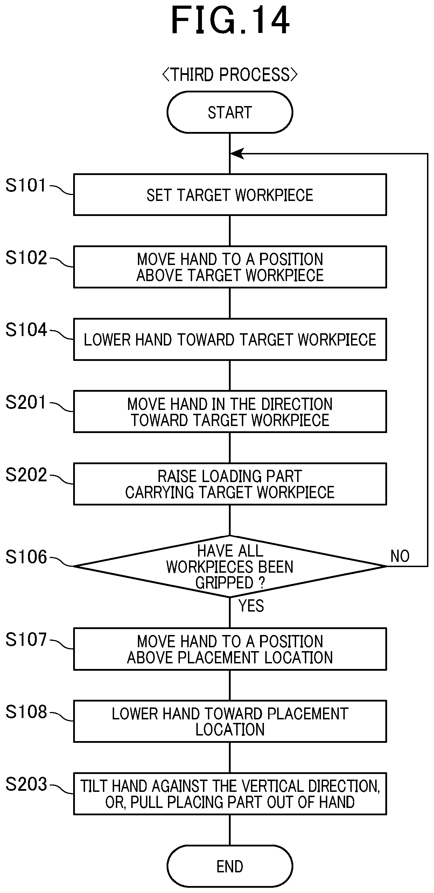

[3] Contents of the third process corresponding to the fifth configuration mode:
When the hand 40E according to fifth configuration mode is employed as the hand 40, the controller 50 can execute the third process as shown in Fig. 14. The third process is a process to realize a method of stacking workpieces 30, each of which is gripped by the hand 40E by placing, one by one, the workpieces on the loading portions 43E - 45E and raising those loading portions 43E - 45E.

The third process differs from the first process shown in Fig. 10 in that the step S103 is omitted, steps S201 and S202 are provided instead of step S105, and step S203 is provided instead of step S109. In the third process, steps S102, S104, S201, and S202 correspond to the gripping process, and steps S107, S108, and S203 correspond to the placement process.
the process at step S201 is executed after step S104. In step S201, the process of moving the hand 40E to the right direction, which is the direction toward a target workpiece in the left and right directions RL, is executed. As a result, the loading portion 43E is placed under the target workpiece, so that the target workpiece is loaded on the loading portion 43E. In this case, the process at steps S104 and S201 move the hand 40E downward and in the right and left direction RL. Therefore, both steps S104 and S201 functionally correspond to the process of loading (placing) the target workpiece on one of loading portions 43E - 45E.

In the subsequent step S202, one of the loading portions 43E-45E loaded with the target workpiece is moved upward. In other words, the process of moving one of the loading portions 43E - 45E on one of which the target workpiece is loaded is executed. After execution of step S202, the process at step S106 is executed.

Step S203 is executed after step S108. In step S203, processing is performed to place the target workpiece at the placement location. Specifically, tilting the hand 40E in the vertical direction UD or pulling the loading portions 43E - 45E out of the hand 40E by moving the loading portions 43E - 45E in the horizontal direction RL is executed. After execution of step S203, this process is completed.

When hand 40E in fifth configuration mode is used as hand 40 and a third process is executed by controller 50, stacking of workpiece 30 is performed by a series of operations as shown in Figure 15. First, as shown in the first step of Fig. 15, the operation to grip the first workpiece 30a is performed. The operations to grip the workpieces 30 are performed in the order shown in Fig. 15, that is, from the left side thereof, "(1) move the hand 40E above the target workpiece", "(2) lower the hand 40E toward the target workpiece" , and then "(3) move the hand 40E in the right direction such that one of the loading portions 43E - 45E is placed under the target workpiece. And, the operations continue to "(4) raise the one of the loading portions 43E - 45E with the target workpiece loaded thereon".

Then, as shown in the second row of Fig. 15, the operations to grip the second workpiece 30b are performed. Further, as shown in the third row of Fig. 15, the operations to grip the third workpiece 30c are performed, and finally, the operations to place the three workpieces 30 at a placement location is performed. The operations to place the workpieces 30 at the placement location are, although some of the figures are omitted, "move the hand 40E to a position above the placement location", "lower the hand 40E toward the placement location", and then "(X) tilt the hand 40E "or "(Y) pull out loading portions 43E - 45E". This places the three 30 workpieces at the placement location in their stacked states.

According to the foregoing embodiment described above, the following effects can be obtained. The stacking system 10 according to the present embodiment is a system for stacking a plurality of workpieces 30 placed at acquisition locations separated from each other in an acquisition area to a predetermined placement location by using the industrial robot arm 20.

The stacking system 10, as explained, has the robot arm 20 with the hand 40 attached to its tip for gripping the workpieces 30, and the controller 50 that controls the operations of the robot arm 20. The hand 40 is structured to be able to grip a plurality of workpieces 30 in a stacked state at the same time. The controller 50 performs the gripping process and placement process as follows.

The controller 50 moves the tip of the robot arm 20 to the vicinity of the acquisition location and performs the gripping process to grip each of the multiple workpieces 30 one by one with the hand 40.

That is, the controller 50 repeats the gripping process to have all of the multiple workpieces 30 gripped by the hand 40, with moving the hand 40 from the current target workpiece to a neighbored workpiece in sequence, during which time the hand 40 is not moved to a placement location to be targeted.

After all the workpieces 30 have been gripped, the controller 50 moves the tip of the robot arm 20 to the vicinity of a target temporary (or predetermined final) placement location with all of the multiple workpieces 30 stacked in multiple layers.

Then, the controller 50 executes a placement process to place all of the plurality of workpieces 30 at the temporary (or predetermined final) placement location while keeping them stacked in a stacked state. Of course, if necessary, the workpieces 30 stacked on one another are then delivered to another location or subjected to necessary work such as packing into a box.

In this way, the cycle time for stacking work can be significantly reduced because the travel distance of the arm tip 21 of the robot arm 20 can be kept short compared to stacking by the normal flow of operations in which the workpieces 30 are, one by one, temporarily placed at a placement location.

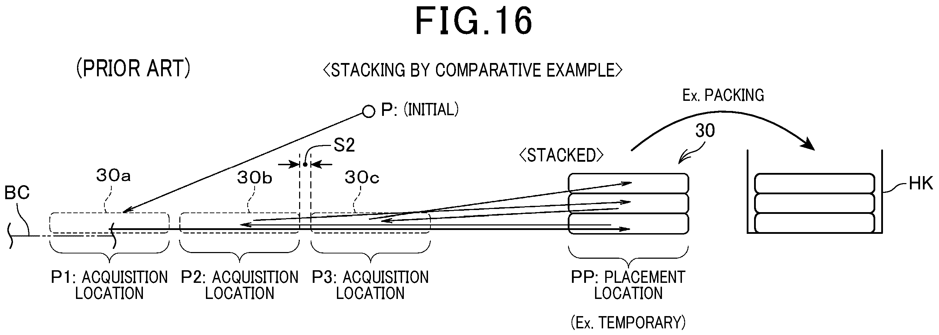

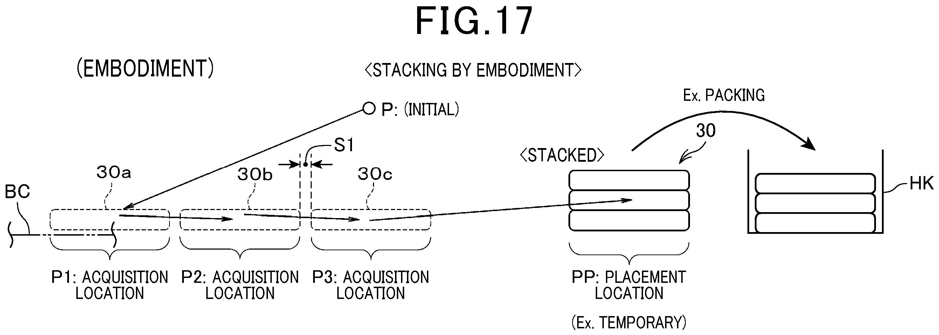

The effects obtained by the present embodiment will be explained in detail below with reference to Figs. 16 and 17. In the following, stacking work performed under the normal operation flow of temporarily placing 30 workpieces one by one may be referred to as stacking by the comparative example (according to the conventional technology). In Figs. 16 and 17, the initial position of the arm tip 21 of the robot arm 20 is indicated by a white circle P, and the rough movement trajectories of the arm tip 21 are indicated by arrows.

In stacking work performed under the comparative example (according to the conventional technology), as shown in Fig. 16, the arm tip 21 of the robot arm 20 moves in the order from "initial position P", to "acquisition location P1 of the first workpiece 30a", to "temporary placement location PP", to "acquisition location P2 of the second workpiece 30b", to "temporary placement location PP", to "acquisition location P3 of the third workpiece 30c", and to "temporary placement location PP".

In contrast, in the present embodiment for the stacking work, as shown in Fig. 17, the arm tip 21 of the robot arm 20 moves in the order from the "initial location P", to "acquisition location P1 of the first workpiece 30a", to "acquisition location P2 of the second workpiece 30b", to "acquisition location P3 of the third workpiece 30c", and then to "temporary placement location PP to be targeted".

The acquisition locations may be fixed locations.

The acquisition locations are, for example, when the workpieces 30 are transported on the conveyor belt BC, a mutually adjacent location on the conveyor BC with a gap S2 or S1 (in this case, the conveyor BC may be stopped once or run at a low speed for gripping workpieces).

In any of the comparative example and embodiment, the plurality of workpieces 30 (30a, 30b, 30c) temporarily or finally stacked at the temporary or final placement location PP may be left as they are, and maybe subjected to subsequent transportation to other locations, for example, or they may be packed in a box HK (box packing), as illustrated.

In the latter case, therefore, the temporary placement location PP is inside the box HK, and the plurality of workpieces 30 may be placed in the box HK as they are, having been packed and grasped by the robot hand in sequence.

As shown in Figs. 16 and 17, according to the stacking technique of the present embodiment, the moving distance of the arm tip 21 of the robot arm 20 is reduced to be shorter than that of the stacking technique according to the comparative example. Specifically, according to the stacking in the present embodiment, the moving distance of the arm tip 21 of the robot arm 20 is shortened by a distance corresponding to a moving distance mainly for returning from the placement location to the acquisition locations, compared to the stacking technique adopted by the comparative example. As a result, the cycle time can be shortened by the time related to such movements.

The hand 40 can be configured to adopt one of the first to third configuration modes and the controller 50 can be configured to execute the first process. As a result, the hand 40 need only be configured to be able to perform opening and closing operations. This configuration simplifies the structure and reduces manufacturing costs.

The hand 40 can be configured to adopt the fourth configuration mode and the controller 50 can be configured to execute the second process. In this configuration, the hand 40 does not need to be opened and closed when gripping the workpieces 30. This makes it possible to further reduce the cycle time for stacking work.

A configuration employing the hand 40A according to the first configuration mode or the hand 40D according to the fourth configuration mode has the following advantages over a configuration employing the hand 40B according to the second configuration mode or the hand 40C according to the third configuration mode.

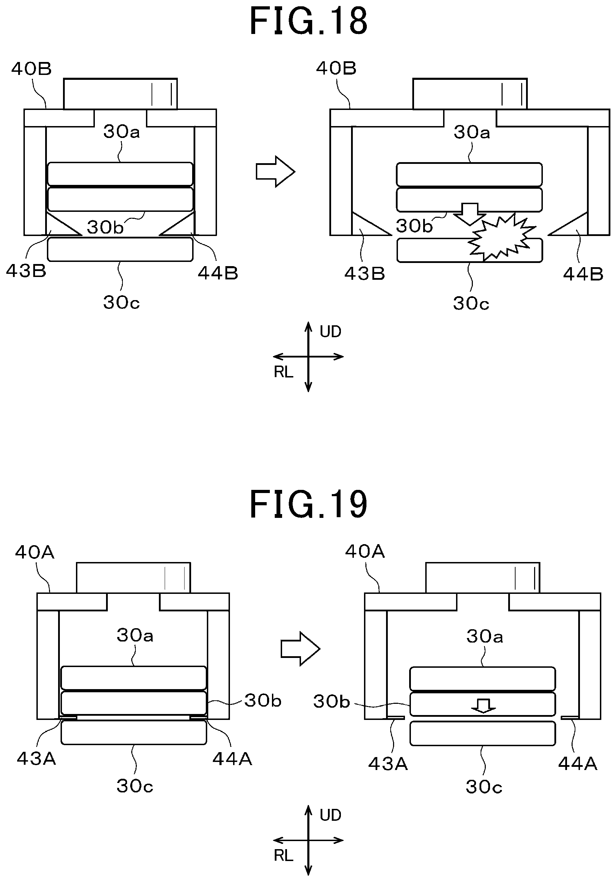

Practically, this advantage can be explained comparatively using Figs. 18 and 19. In Fig. 18, the hand 40B is shown such that the thickness of the loading portions 43B and 44B is about the same as or larger than the thickness of the workpieces 30. Although not shown in the figure, the hand 40C is similar to the hand 40B.

In contrast, as shown in Fig. 19, the hand 40A has a smaller thickness of the loading portions 43A and 44A than the thickness of each of workpieces 30. The same is true for the hand 40D, which is not shown in the figure, as for hand 40A. Thus, the thicknesses of the respective loading portions 43A and 44A of the hand 40A can be thinner than the thicknesses of the respective loading portions 43B and 44B of the hand 40B.

Hands such as the hand 40B with the relatively thick loading portions 43B and 44B often have inconveniences, as illustrated in Fig. 18. That is, when the hand 40B is opened to grip the second or subsequent workpiece 30, the lower main surface 32 of the lowest workpiece 30B of the workpieces 30 already held and the upper main surface 31 of the workpiece 30C to be gripped from now become widely separated from each other (refer to Fig. 18, the left-side illustration). This causes the workpiece 30, which had already been gripped, to fall from a relatively high position and impact the workpiece 30 (refer to Fig. 18, the right-side illustration).

In contrast, in the hand 40A, the loading portions 43A and 44A whose thicknesses are relatively thinner than the thicknesses of the respective workpieces, acts as shown in Fig. 19. Specifically, when the hand 40A is opened to grip the second or subsequent workpieces 30, the lower main surface 32 of the lowest workpiece 30B of the workpieces already held 30 and the upper main surface 31 of the workpiece 30C to be gripped from now are closer to each other, as illustrated in Fig. 19, the left-side sketch. Thus, the workpiece 30 that has already been gripped does not fall from a relatively high position, compared with that shown in Fig. 18, and the workpiece 30 is not subjected to impact. Accordingly, when the hand 40A according to the first configuration mode or the hand 40D according to the fourth configuration mode is used as a hand 40, the workpieces 30 that have already been gripped will be prevented from falling and impacting the workpiece 30 when gripping the second or subsequent workpieces 30, as illustrated in the diagram on the right-hand side of Fig. 19.

### <Modifications of the configuration of the hand>

The configuration of the hand 40 can be modified by adding a mechanism to prevent the workpiece 30 from falling when the tip of the robot arm 20 is moved with the gripped workpieces 30, i.e., during transportation of the workpieces 30.

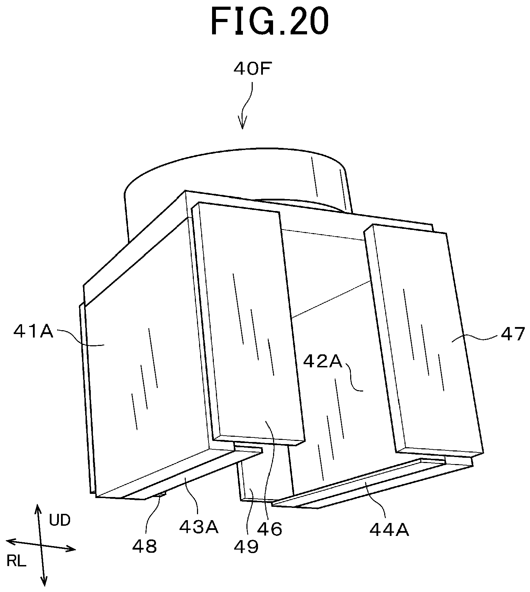

Examples of such variations are described with reference to Figs. 20 through 22.

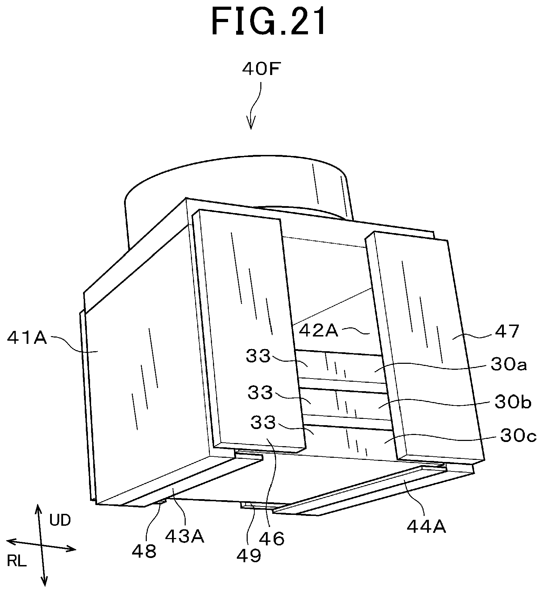

As shown in Figs. 20 and 21, a hand 40F according to this modification has four additional supports 46, 47, 48, and 49 which are added to the hand 40A according to first configuration mode.

The supports 46 - 49 are all composed of rectangular plate-shaped members. As shown in Fig. 21, the supports 46 - 49 are provided to support two of the four side surfaces 33, which are the surfaces excluding the main surface of the workpiece 30 when the workpiece 30 are gripped. The remaining two of the side surfaces 33 are supported by claws 41A and 42A of the hand 40F. According to the hand 40F of the present modification, when the workpieces 30 are gripped, the four sides of the respective workpiece 30 are covered by the components of the hand 40F including the supports 46 to 49. This prevents the workpiece 30 from falling during transportation of the workpieces 30.

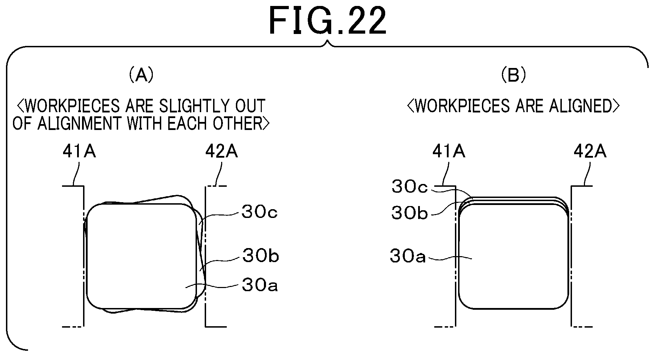

According to the hand 40F of this modification, the workpieces 30 are held down from all sides by simply gripping the workpiece 30 thanks to the structure of the hand 40F. Therefore, the three workpieces 30 can be uniformly aligned, and as a result, the three workpieces 30 can be stacked in an aligned state. Furthermore, when all the workpieces 30 are gripped, the workpieces 30 may be slightly misaligned with each other as shown by the left-side illustration of Fig. 22. Even in this case, according to the hand 40F, when the tip of the robot arm 20 is moved to a position above the placement location in that state, it is stopped suddenly at the position above the placement location. This allows inertial force to act on the workpieces 30 to ensure that the three workpieces 30 are stacked as shown on the right-side illustration of Fig. 22.

### (Other embodiments)

The numerical values, etc. shown in the above embodiments are examples and are not limited thereto.

The robot arm 20 does not have to be configured as a horizontal articulated robot, and various types of robot arms can be used, for example, one configured as a vertical articulated robot with a 6- or 7-axis arm.

### (Partial reference sings list)

10...stacking system
20...robot arm
30, 30a, 30b, 30c...workpiece(s)
31,32...main surface
33...side surface
40, 40A, 40B, 40C, 40D, 40E, 40F...hand
41A, 41B, 41C, 41D, 41E, 42A, 42B, 42C, 42D...claws
43A, 43B, 43C, 43D, 43E, 44A, 44B, 44C, 44D, 44E, 45E...loading portion
46, 47, 48, 49...support
50...controller

## Claims

1. A system (10) for gripping a plurality of workpieces (30a, 30b, 30c) placed at mutually separated acquisition locations (P1 to P3) and then stacking the plurality of gripped workpieces (30a, 30b, 30c) at a predetermined placement location (PP), comprising:
a robot arm (20) with a one hand (40) attached to a tip of the robot arm (20) the one hand (40) being for griping the workpieces (30a, 30b, 30c); and
a controller (50) configured to control operations of the robot arm (20),
wherein
the hand is configured to grip all of the plurality of workpieces (30a, 30b, 30c) in a multi-stacked state, and
the controller (50) is configured to perform:
a gripping process for moving the tip of the robot arm (20) to the vicinity of each of the acquisition locations (P1 to P3) and gripping the plurality of workpieces (30a, 30b, 30c) one by one by the one hand, the gripping process being repeated until all of the plurality of workpieces (30a, 30b, 30c) are gripped by the hand (40) in the multi-stacked state; and
a placement process for moving the tip of the robot arm (20) to the vicinity of the placement location (PP) and placing all of the multiple workpieces (30a, 30b, 30c) at one time at the placement location (PP) during which placement the workpieces (30a, 30b, 30c) are still stacked in the multi-stacked state.

2. The system according to claim 1, wherein
each of the workpieces (30a, 30b, 30c) has a flat shape with two main surfaces facing each other, wherein a horizontal direction is defined as one of two mutually-orthogonal directions along the main surfaces and a vertical direction is defined as a vertical direction orthogonal to the main surfaces,
the hand (40) is provided with claws including two craws which open and close by being moved parallel to the horizontal direction,
each of the two claws has a tip, the tips of the two claws having loading portions formed in shape to extend in the horizontal direction, and
the gripping process performed by the controller (50) includes:
a process for moving the hand to a position above a target workpiece to be gripped among the workpieces,
a process for opening the two claws in the horizontal direction and lowering the hand until the target workpiece, and
a process for closing the two claws in the horizontal direction to load the target workpiece on the loading portions.

3. The system according to claim 1, wherein
each of the workpieces (30a, 30b, 30c) has a flat shape with two main surfaces facing each other, wherein a horizontal direction is defined as one of two mutually-orthogonal directions along the main surfaces and a vertical direction is defined as a vertical direction orthogonal to the main surfaces,
the hand (40) is provided with claws including two craws which open and close by being moved parallel to the horizontal direction,
each of the two claws has a tip, the tips of the two claws having loading portions formed in shape to extend in the horizontal direction,
the loading portions are respectively rotatable upward around a base portion of each of the loading portions, the base portion being rotatably connected to each of the claws, and
the gripping process performed by the controller (50) includes:
a process for moving the hand to a position above a target workpiece to be gripped among the workpieces,
a process for lowering the hand until the target workpiece to load the target workpiece on the loading portions via an upward rotation of each of the loading portions, the upward rotation being generated by lowering the hand to be pushed to the target workpiece.

4. The system according to any one of claims 1 to 3, wherein the loading portions are smaller in size than the workpieces in the vertical direction.

5. The system according to claim 1, wherein
each of the workpieces (30a, 30b, 30c) has a flat shape with two main surfaces facing each other, wherein a horizontal direction is defined as one of two mutually-orthogonal directions along the main surfaces and a vertical direction is defined as a vertical direction orthogonal to the main surfaces,
the hand (40) is provided with a single claw whose end has a plurality of loading portions extending in the horizontal direction and being stacked in the vertical direction, the plurality of landing portions being configured to movable in the vertical direction and in the horizontal direction, and
the gripping process performed by the controller (50) includes:
a process for moving a position above a target workpiece to be gripped among the workpieces;
a process for lowering the hand in the vertical direction and moving the hand in the horizontal direction such that the target workpiece is loaded on each of the loading portions which have been stacked in the vertical direction; and
a process for moving upward the loading portions each of which is loaded with the target workpiece, and
the placement process performed by the controller (50) includes:
a process for either tilting the hand to the vertical direction or moving the hand in the horizontal direction to pull out the loading portions from the hand.

6. The system according to any one of claims 2 to 5, wherein the hand (40) is provided with supports for supporting the workpieces gripped by the hand on sides of the workpieces (30a, 30b, 30c).

7. A method of gripping a plurality of workpieces (30a, 30b, 30c) placed at mutually separated acquisition locations (P1 to P3) and then stacking the plurality of gripped workpieces (30a, 30b, 30c) at a predetermined placement location (PP), the method being applied a robot arm (20) with a one hand (40) attached to a tip of the robot arm (20) the one hand (40) being for griping the workpieces (30a, 30b, 30c), the one hand (40) being configured to grip all of the plurality of workpieces (30a, 30b, 30c) in a multi-stacked state,
the method including steps of:
moving the tip of the robot arm (20) to the vicinity of each of the acquisition locations (P1 to P3) and gripping the plurality of workpieces (30a, 30b, 30c) one by one by the one hand (40), the moving and gripping step being repeated until all of the plurality of workpieces (30a, 30b, 30c) are gripped by the hand (40) in the multi-stacked state; and
moving the tip of the robot arm (20) to the vicinity of the placement location (PP) and placing all of the multiple workpieces (30a, 30b, 30c) at one time at the placement location (PP) during which placement the workpieces (30a, 30b, 30c) are still stacked in the multi-stacked state.

## Patentansprüche

1. System (10) zum Greifen einer Vielzahl von Werkstücken (30a, 30b, 30c), die an voneinander getrennten Erlangungsorten (P1 bis P3) platziert sind, und dann Stapeln der Vielzahl von gegriffenen Werkstücken (30a, 30b, 30c) an einem vorbestimmten Platzierungsort (PP), wobei das System aufweist:
einen Roboterarm (20) mit einer Hand (40), die an einer Spitze des Roboterarms (20) angebracht ist, wobei die eine Hand (40) zum Greifen der Werkstücke (30a, 30b, 30c) dient; und
eine Steuerungseinrichtung (50), die konfiguriert ist, um Vorgänge des Roboterarms (20) zu steuern,
wobei
die Hand konfiguriert ist, um alle der Vielzahl von Werkstücken (30a, 30b, 30c) in einem mehrfach gestapelten Zustand zu greifen, und
die Steuerungseinrichtung (50) konfiguriert ist, um durchzuführen:
einen Greifprozess zum Bewegen der Spitze des Roboterarms (20) in die Nähe jedes der Erlangungsorte (P1 bis P3) und Greifen der Vielzahl von Werkstücken (30a, 30b, 30c) Stück für Stück durch die eine Hand, wobei der Greifprozess wiederholt wird, bis alle der Vielzahl von Werkstücken (30a, 30b, 30c) durch die Hand (40) in dem mehrfach gestapelten Zustand gegriffen sind; und
einen Platzierungsprozess zum Bewegen der Spitze des Roboterarms (20) in die Nähe des Platzierungsorts (PP) und Platzieren aller der mehreren Werkstücke (30a, 30b, 30c) an dem Platzierungsort (PP) zu einer Zeit während der Platzierung, bei der die Werkstücke (30a, 30b, 30c) weiterhin in dem mehrfach gestapelten Zustand gestapelt sind.

2. System nach Anspruch 1, wobei
jedes der Werkstücke (30a, 30b, 30c) eine flache Form mit zwei Hauptflächen hat, die einander gegenüberliegen, wobei eine horizontale Richtung als eine von zwei zueinander senkrechten Richtungen entlang der Hauptflächen definiert ist und eine vertikale Richtung als eine vertikale Richtung senkrecht zu den Hauptflächen definiert ist,
die Hand (40) mit Klauen bereitgestellt ist, die zwei Klauen enthalten, die sich öffnen und schließen, indem sie parallel zu der horizontalen Richtung bewegt werden,
jede der zwei Klauen eine Spitze hat, wobei die Spitzen der zwei Klauen Ladeabschnitte haben, die in einer Form ausgebildet sind, um sich in der horizontalen Richtung zu erstrecken, und
der Greifprozess, der durch die Steuerungseinrichtung (50) durchgeführt wird, enthält:
einen Prozess zum Bewegen der Hand zu einer Position oberhalb eines Zielwerkstücks, das unter den Werkstücken gegriffen werden soll,
einen Prozess zum Öffnen der zwei Klauen in der horizontalen Richtung und Senken der Hand bis zu dem Zielwerkstück, und
einen Prozess zum Schließen der zwei Klauen in der horizontalen Richtung, um das Zielwerkstück auf die Ladeabschnitte zu laden.

3. System nach Anspruch 1, wobei
jedes der Werkstücke (30a, 30b, 30c) eine flache Form mit zwei Hauptflächen hat, die einander gegenüberliegen, wobei eine horizontale Richtung als eine von zwei zueinander senkrechten Richtungen entlang der Hauptflächen definiert ist und eine vertikale Richtung als eine vertikale Richtung senkrecht zu den Hauptflächen definiert ist,
die Hand (40) mit Klauen bereitgestellt ist, die zwei Klauen enthalten, die sich öffnen und schließen, indem sie parallel zu der horizontalen Richtung bewegt werden,
jede der zwei Klauen eine Spitze hat, wobei die Spitzen der zwei Klauen Ladeabschnitte haben, die in einer Form ausgebildet sind, um sich in der horizontalen Richtung zu erstrecken,
die Ladeabschnitte jeweils um einen Basisabschnitt von jedem der Ladeabschnitte nach oben rotierbar sind, wobei der Basisabschnitt rotierbar mit jeder der Klauen verbunden ist, und
der Greifprozess, der durch die Steuerungseinrichtung (50) durchgeführt wird, enthält:
einen Prozess zum Bewegen der Hand zu einer Position oberhalb eines Zielwerkstücks, das unter den Werkstücken gegriffen werden soll,
einen Prozess zum Senken der Hand bis zu dem Zielwerkstück, um das Zielwerkstück über eine Aufwärtsrotation von jedem der Ladeabschnitte auf die Ladeabschnitte zu laden, wobei die Aufwärtsrotation durch ein Senken der Hand erzeugt wird, damit diese zu dem Zielwerkstück geschoben wird.

4. System nach einem der Ansprüche 1 bis 3, wobei die Ladeabschnitte in der Größe kleiner als die Werkstücke in der vertikalen Richtung sind.

5. System nach Anspruch 1, wobei
jedes der Werkstücke (30a, 30b, 30c) eine flache Form mit zwei Hauptflächen hat, die einander gegenüberliegen, wobei eine horizontale Richtung als eine von zwei zueinander senkrechten Richtungen entlang der Hauptflächen definiert ist und eine vertikale Richtung als eine vertikale Richtung senkrecht zu den Hauptflächen definiert ist,
die Hand (40) mit einer einzelnen Klaue bereitgestellt ist, deren Ende eine Vielzahl von Ladeabschnitten hat, die sich in der horizontalen Richtung erstrecken und in der vertikalen Richtung gestapelt sind, wobei die Vielzahl von Ladeabschnitten konfiguriert ist, um sich in der vertikalen Richtung und in der horizontalen Richtung zu bewegen, und
der Greifprozess, der durch die Steuerungseinrichtung (50) durchgeführt wird, enthält:
einen Prozess zum Bewegen einer Position oberhalb eines Zielwerkstücks, das unter den Werkstücken gegriffen werden soll;
einen Prozess zum Senken der Hand in der vertikalen Richtung und Bewegen der Hand in der horizontalen Richtung derart, dass das Zielwerkstück auf jeden der Ladeabschnitte, die in der vertikalen Richtung gestapelt worden sind, geladen wird; und
einen Prozess zum Aufwärtsbewegen der Ladeabschnitte, von denen jeder mit dem Zielwerkstück geladen ist, und
der Platzierungsprozess, der durch die Steuerungseinrichtung (50) durchgeführt wird, enthält:
einen Prozess entweder zum Neigen der Hand in die vertikale Richtung oder Bewegen der Hand in die horizontale Richtung, um die Ladeabschnitte aus der Hand herauszuziehen.

6. System nach einem der Ansprüche 2 bis 5, wobei die Hand (40) mit Stützen zum Stützen der Werkstücke, die durch die Hand auf den Seiten der Werkstücke (30a, 30b, 30c) gegriffen werden, bereitgestellt ist.

7. Verfahren zum Greifen einer Vielzahl von Werkstücken (30a, 30b, 30c), die an voneinander getrennten Erlangungsorten (P1 bis P3) platziert sind, und dann Stapeln der Vielzahl von gegriffenen Werkstücken (30a, 30b, 30c) an einem vorbestimmten Platzierungsort (PP), wobei das Verfahren auf einen Roboterarm (20) angewendet wird, wobei eine Hand (40) an einer Spitze des Roboterarms (20) angebracht ist, wobei die eine Hand (40) zum Greifen der Werkstücke (30a, 30b, 30c) dient, wobei die eine Hand (40) konfiguriert ist, um alle der Vielzahl von Werkstücken (30a, 30b, 30c) in einem mehrfach gestapelten Zustand zu greifen,
wobei das Verfahren die folgenden Schritte enthält:
Bewegen der Spitze des Roboterarms (20) in die Nähe jedes der Erlangungsorte (P1 bis P3) und Greifen der Vielzahl von Werkstücken (30a, 30b, 30c) Stück für Stück durch die eine Hand (40), wobei der Bewegungs- und Greifschritt wiederholt wird, bis alle der Vielzahl von Werkstücken (30a, 30b, 30c) durch die Hand (40) in dem mehrfach gestapelten Zustand gegriffen sind; und
Bewegen der Spitze des Roboterarms (20) in die Nähe des Platzierungsorts (PP) und Platzieren aller der mehreren Werkstücke (30a, 30b, 30c) an dem Platzierungsort (PP) zu einer Zeit während der Platzierung, bei der die Werkstücke (30a, 30b, 30c) weiterhin in dem mehrfach gestapelten Zustand gestapelt sind.

## Revendications

1. Système (10) de préhension d'une pluralité de pièces (30a, 30b, 30c) placées au niveau d'emplacements d'acquisition mutuellement séparés (P1 à P3) puis d'empilage de la pluralité de pièces saisies (30a, 30b, 30c) au niveau d'un emplacement de placement prédéterminé (PP), comprenant :
un bras robotisé (20) muni d'une main (40) fixée à une extrémité du bras robotisé (20), la main (40) servant à saisir les pièces (30a, 30b, 30c) ; et
un dispositif de commande (50) configuré pour commander les opérations du bras robotisé (20),
dans lequel
la main est configurée pour saisir l'ensemble de la pluralité de pièces (30a, 30b, 30c) dans un état multi-empilé, et
le dispositif de commande (50) est configuré pour effectuer :
un processus de préhension pour déplacer l'extrémité du bras robotisé (20) à proximité de chacun des emplacements d'acquisition (P1 à P3) et saisir la pluralité de pièces (30a, 30b, 30c) une à une par la main, le processus de préhension étant répété jusqu'à ce que l'ensemble de la pluralité des pièces (30a, 30b, 30c) soit saisie par la main (40) dans l'état multi-empilé ; et
un processus de placement pour déplacer l'extrémité du bras robotisé (20) à proximité de l'emplacement de placement (PP) et placer l'ensemble des pièces multiples (30a, 30b, 30c) en une seule fois au niveau de l'emplacement de placement (PP), placement pendant lequel les pièces (30a, 30b, 30c) sont toujours empilées dans l'état multi-empilé.

2. Système selon la revendication 1, dans lequel
chacune des pièces (30a, 30b, 30c) présente une forme plate avec deux surfaces principales se faisant face, dans lequel une direction horizontale est définie comme l'une des deux directions mutuellement orthogonales le long des surfaces principales, et une direction verticale est définie comme une direction verticale orthogonale aux surfaces principales,
la main (40) est munie de griffes incluant deux mâchoires qui s'ouvrent et se ferment en étant déplacées parallèlement à la direction horizontale,
chacune des deux griffes présente une extrémité, les extrémités des deux griffes présentant des parties de charge conçues dans une forme pour s'étendre dans la direction horizontale, et
le processus de préhension effectué par le dispositif de commande (50) inclut :
un processus permettant de déplacer la main jusqu'à une position au-dessus d'une pièce cible à saisir parmi les pièces,
un processus permettant d'ouvrir les deux griffes dans la direction horizontale et d'abaisser la main jusqu'à la pièce cible, et
un processus permettant de fermer les deux griffes dans la direction horizontale afin de charger la pièce cible sur les parties de chargement.

3. Système selon la revendication 1, dans lequel
chacune des pièces (30a, 30b, 30c) présente une forme plate avec deux surfaces principales se faisant face, dans lequel une direction horizontale est définie comme l'une des deux directions mutuellement orthogonales le long des surfaces principales, et une direction verticale est définie comme une direction verticale orthogonale aux surfaces principales,
la main (40) est munie de griffes incluant deux mâchoires qui s'ouvrent et se ferment en étant déplacées parallèlement à la direction horizontale,
chacune des deux griffes présente une extrémité, les extrémités des deux griffes présentant des parties de charge conçues dans une forme pour s'étendre dans la direction horizontale,
les parties de chargement peuvent respectivement pivoter vers le haut autour d'une partie de base de chacune des parties de chargement, la partie de base étant reliée de manière rotative à chacune des griffes, et
le processus de préhension effectué par le dispositif de commande (50) inclut :
un processus permettant de déplacer la main jusqu'à une position au-dessus d'une pièce cible à saisir parmi les pièces,
un processus permettant d'abaisser la main jusqu'à la pièce cible pour charger la pièce cible sur les parties de chargement via une rotation vers le haut de chacune des parties de chargement, la rotation vers le haut étant générée par l'abaissement de la main à pousser vers la pièce cible.

4. Système selon l'une quelconque des revendications 1 à 3, dans lequel les parties de chargement sont de taille inférieure à celle des pièces dans la direction verticale.

5. Système selon la revendication 1, dans lequel
chacune des pièces (30a, 30b, 30c) présente une forme plate avec deux surfaces principales se faisant face, dans lequel une direction horizontale est définie comme l'une des deux directions mutuellement orthogonales le long des surfaces principales, et une direction verticale est définie comme une direction verticale orthogonale aux surfaces principales,
la main (40) est munie d'une seule griffe dont l'extrémité présente une pluralité de parties de chargement s'étendant dans la direction horizontale et étant empilées dans la direction verticale, la pluralité de parties d'appui étant configurées pour se déplacer dans la direction verticale et dans la direction horizontale, et
le processus de préhension effectué par le dispositif de commande (50) inclut :
un processus permettant de déplacer une position au-dessus d'une pièce cible afin de la saisir parmi les pièces ;
un processus permettant d'abaisser la main dans la direction verticale et de la déplacer dans la direction horizontale de manière à ce que la pièce cible soit chargée sur chacune des parties de chargement qui ont été empilées dans la direction verticale ; et
un processus permettant de déplacer vers le haut les parties de chargement, chacune étant chargée avec la pièce cible, et
le processus de placement effectué par le dispositif de commande (50) inclut :
un processus permettant soit d'incliner la main dans la direction verticale, soit de déplacer la main dans la direction horizontale pour extraire les parties de chargement de la main.

6. Système selon l'une quelconque des revendications 2 à 5, dans lequel la main (40) est munie de supports pour soutenir les pièces saisies par la main sur des côtés des pièces (30a, 30b, 30c).

7. Procédé de préhension d'une pluralité de pièces (30a, 30b, 30c) placées au niveau d'emplacements d'acquisition mutuellement séparés (P1 à P3) puis d'empilement de la pluralité de pièces saisies (30a, 30b, 30c) au niveau d'un emplacement de placement prédéterminé (PP), le procédé étant appliqué à un bras robotisé (20) munie d'une main (40) fixée à une extrémité du bras robotisé (20), la main (40) étant destinée à saisir les pièces (30a, 30b, 30c), la main (40) étant configurée pour saisir l'ensemble de la pluralité des pièces (30a, 30b, 30c) dans un état multi-empilé,
le procédé incluant les étapes suivantes :
le déplacement de l'extrémité du bras robotisé (20) à proximité de chacun des emplacements d'acquisition (P1 à P3) et la préhension de la pluralité de pièces (30a, 30b, 30c) une à une par la main (40), l'étape de déplacement et de préhension étant répétée jusqu'à ce que l'ensemble de la pluralité de pièces (30a, 30b, 30c) soit saisi par la main (40) dans l'état multi-empilé ; et
le déplacement de l'extrémité du bras robotisé (20) à proximité de l'emplacement de placement (PP) et le placement de toutes les pièces multiples (30a, 30b, 30c) en une seule fois au niveau de l'emplacement de placement (PP), placement pendant lequel les pièces (30a, 30b, 30c) sont toujours empilées dans l'état multi-empilé.
